# EUROPÄISCHE PATENTSCHRIFT

(11) **EP 2 578 891 B1**
(45) Veröffentlichungstag und Bekanntmachung des Hinweises auf die Patenterteilung: **06.06.2018**
(21) Anmeldenummer: 12006800.2
(22) Anmeldetag: 29.09.2012
(51) Int. Cl.: F16B 7/04, F16B 7/18

(54) **Adapter**
Adapter
Adapteur

(30) Priorität: 07.10.2011 DE 202011106399 U
(43) Veröffentlichungstag der Anmeldung: 10.04.2013
(73) Patentinhaber: Rixen, Wolfgang, 42699 Solingen (DE); Pies, Gerrit, 42699 Solingen (DE)
(72) Erfinder: Rixen, Wolfgang, 42699 Solingen (DE); Pies, Gerrit, 42699 Solingen (DE)
(74) Vertreter: BRP Renaud & Partner mbB Rechtsanwälte Patentanwälte Steuerberater

(56) Entgegenhaltungen:
- EP-A2- 2 299 541
- DE-A1- 4 406 208

## Beschreibung

Die Erfindung betrifft einen Adapter zur Befestigung von Elementen an Profilrohren, die mindestens zwei Nuten mit im wesentlichen geraden nicht hinterschnittenen Rändern aufweisen.

Derartige Adapter sind grundsätzlich bekannt. Sie dienen einerseits der Befestigung eines weiteren Profilrohres an das erste. Allerdings können damit auch andere Einrichtungen an das Profilrohr befestigt werden, die verschiedenen Aufgaben und Zwecken dienen. Es ist aber auch möglich, Halterungen entweder für das Rohr selbst oder für andere Gegenstände daran zu befestigen. Ein gattungsgemäßer Adapter ist beispielsweise aus der DE 44 06 208 A bekannt.

Allerdings ist dabei stets notwendig, dass die Nuten zum Ergreifen einer Klemmeinrichtung hinterschnittene Nuten sein müssen.

Der Erfindung liegt daher die Aufgabe zugrunde, einen Adapter der eingangs genannten Art anzugeben, der auch an Profilrohren mit glatten Nuten mit einfachen technischen Mitteln befestigt werden kann.

Diese Aufgabe wird erfindungsgemäß mit einem Adapter nach Anspruch 1 gelöst. Dabei besteht der Adapter aus einem Grundkörper, der mittels einer aus zwei Teilen bestehenden zwei Ränder unterschiedlicher Nuten baggerartig ergreifenden Einrichtung und einer Schraubkombination an dem Profilrohr befestigbar ist.

Der Kern der Erfindung besteht darin, nicht wie früher üblich, jeweils nur in die Hinterschnitte der hinterschnittenen Nut einzugreifen, sondern auch sogenannte glatte Nuten zur Befestigung von Elementen verwenden zu können. Aufgrund des Winkels, der von den einander benachbarten Nutenrändern aufgespannt wird, ist es der Einrichtung möglich, baggerartig die geraden Ränder zu ergreifen und form- und kraftschlüssig damit die Verbindung aufzubauen.

Dabei ist es von besonderem Vorteil, wenn die Befestigung mittels der Einrichtung über Außenklemmung eines zwischen zwei Nuten befindlichen Vorsprungs erfolgt.

Erfindungsgemäß wird hauptsächlich ausgenutzt, dass der Vorsprung zwischen zwei benachbarten Nuten aufgrund der unterschiedlichen Winkel der angrenzenden Nutenränder diese Nutenränder quasi also schräge Klemmebenen benutzt werden können. Erfindungsgemäß ist vorgesehen, dass die Einrichtung aus zwei Schwenkhebeln besteht, die im Grundkörper mittels einer Mutter durch eine Schraube, also der Schraubenkombination, derart bewegbar sind, dass diese Schwenkhebel mit ihrem aus dem Grundkörper in Richtung Profilrohr herausragenden freien Enden den Vorsprung klemmend ergreifen, wobei eine kraft- und formschlüssige Verbindung vorhanden ist. Durch die im Querschnitt schaufelartige Form der Schwenkhebel ist es daher besonders einfach, mittels der Schraubeinrichtung diese Schwenkhebel in Eingriff mit den Nutenrändern zu bringen. Zum Öffnen muss selbstverständlich die Rotation der Schraube geändert werden.

Es gibt eine Vielzahl von Möglichkeiten, entsprechende Muttern vorzusehen. Besonders einfach und daher kostengünstig ist es aber, wenn die Mutter eine Vierkantmutter ist.

Der Befestigungsvorgang des Elementes an das Profilrohr kann noch dadurch beschleunigt werden, wenn die Schraube auch der Befestigung des Elements an den Adapter dient.

Nicht nur aus Festigkeitsgründen, sondern auch aus ästhetischen, ist es vorteilhaft, wenn der Grundkörper einerseits an diese Oberfläche des Profilrohres und auf der entgegen gesetzten Seite an das anzubringende Element angepasst ist.

Die Einsatzmöglichkeit des Adapters kann dadurch erhöht werden, wenn das Element an dem Adapter in 90°-Schritten gedreht anbringbar ist.

Besonders vorteilhaft ist es, wenn der Schwenkhebel und die Mutter als Teile der Einrichtung im Grundkörper durch Rastnasen gehalten und gesichert sind. Dadurch wird die Lage der Einzelteile innerhalb des Adapters vorgegeben, wodurch die Montage sehr erleichtert wird.

Eine besonders einfache Betätigung der Schraube ist gegeben, wenn die Schraube zu ihrer Betätigung bzw. Drehung einen Innenvielkant aufweist.

Selbstverständlich ist es nicht notwendig, lediglich zwei Nuten bei dem Profilrohr vorzusehen. Da mit Anzahl der Nuten auch die Größe der Vorsprünge sich verringert, ist es von Vorteil, wenn mehr als zwei Nuten vorhanden sind und dass die Schwenkhebel mindestens zwei Vorsprünge übergreifen.

Als Material wird für den Adapter wird Metall, Kunststoff oder eine Kombination daraus verwandt.

Weitere Vorteile und Merkmale der Erfindung ergeben sich aus der folgenden Beschreibung eines Ausführungsbeispiels sowie aus den Figuren, auf die Bezug genommen wird. Es zeigen:
- Fig.1: eine perspektivische Darstellung eines vollständig montierten Adapters;
- Fig.2: eine perspektivische Explosionsdarstellung der Einzelteile des Adapters;
- Fig.3: eine teilweise geschnittene Draufsicht auf die Anordnung gemäß Figur 1 vor dem Klemmvorgang durch die Schwenkhebel; und
- Fig.4: eine der Fig.3 ähnliche Draufsicht mit befestigten Schwenkhebeln.

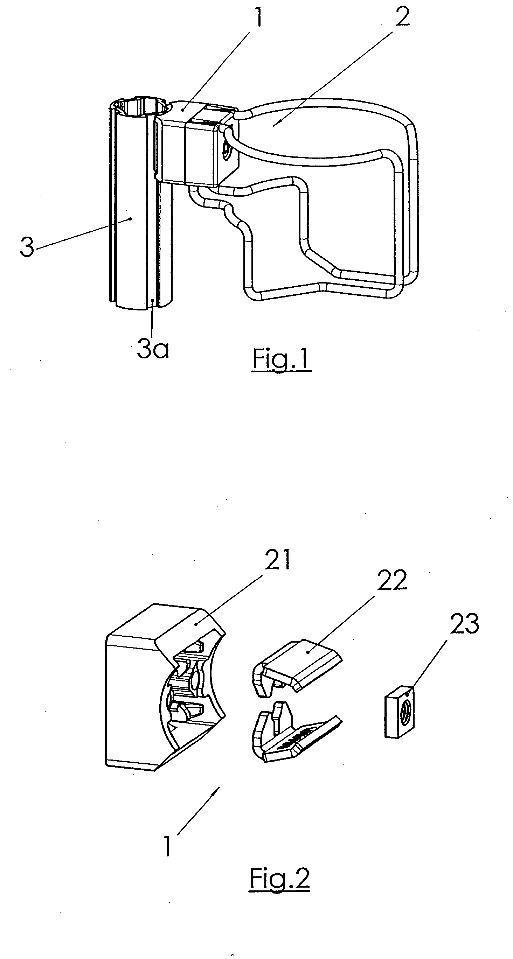

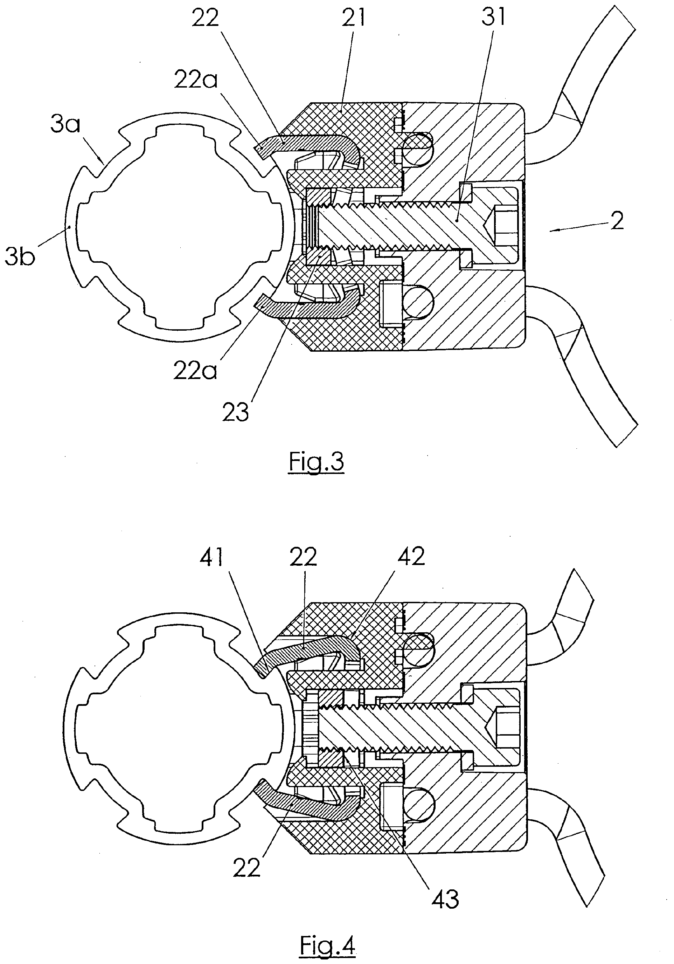

Anhand der Figuren 1 bis 4 wird nun ein Ausführungsbeispiel eines Adapters 1 näher beschrieben werden. Dabei bedeuten gleiche Bezugszeichen auch gleiche Bauteile oder Merkmale, sofern nichts anderes ausgesagt ist.

Der Adapter 1 dient zur Befestigung von Elementen 2 an Profilrohren 3, die keine hinterschnittene Nuten 3a aufweisen. Diese Nuten 3a sind daher im wesentlichen mit geraden Rändern versehen, so dass der am häufigsten bei hinterschnittenen Nuten verwandte Befestigungsteil, nämlich der sogenannte Nutenstein, nicht verwandt werden kann, da er sich nicht an dem Hinterschnittrand abdrücken kann.

Dadurch fällt auch die Möglichkeit weg, mit der Befestigungsschraube 31 des Elementes 2 direkt die Verbindung mit dem Profilrohr 3 herzustellen.

Es ist deshalb notwendig, einen sogenanten Adapter 1 zu verwenden, der die Nachteile der geraden Ränder der Nuten 3a der Profilrohre 3 beseitigt.

Der dargestellt Adapter 1 besteht in diesem Falle aus einem Grundkörper 21, der mittels einer aus zwei Teilen bestehenden zwei Ränder unterschiedlicher Nuten 3a ergreifenden Einrichtungen 22 versehen ist, die mittels einer Schraubkombination 23,31 an dem Profilrohr 3 befestigt werden kann.

Die Schwenkhebel 22 haben einen im wesentlichen baggerschaufelförmigen Querschnitt, wobei der Rand, der mittels im Montagezustand mit aufeinander zu gerichteten Endstücken versehen ist.

Diese zwei Schwenkhebel 22 werden im Grundkörper 21 derart angeordnet, dass es möglich ist, diese Schwenkhebel 22 im Grundkörper 21 mittels einer Mutter 23 und einer Schraube 31, also der oben genannten Schraubkombination, derart bewegbar sind, dass diese Schwenkhebel 22 mit ihren aus dem Grundkörper 21 in Richtung Profilrohr 3 herausragenden freien Enden 22a den Vorsprung 3b klemmend und baggerartig ergreifen können. Dabei entsteht eine kraft- und formschlüssige Verbindung zwischen dem Adapter bzw. den Schwenkhebeln 22 und dem Vorsprung bzw. Profilvorsprung 3b bzw. dem Profilrohr 3.

Die in den Zeichnungen erkennbare Mutter ist eine Vierkantmutter 23, die nicht nur einfach herstellbar ist, sondern auch innerhalb des Grundkörpers 21 durch die vier Seitenflächen leicht geführt werden kann.

In diese Vierkantmutter 23 greift dann das eigentlich zu dem Element 2 gehörende Schraubelement, in diesem Falle die Schraube 31, ebenfalls ein, so dass die Befestigung des Elementes 2 an den Profilrohr 3 mit Hilfe der dem zu befestigenden Systemelement erfolgen kann.

Ferner ist der Grundkörper einerseits an die Oberfläche des Profilrohres 3 und andererseits auf die auf der entgegen gesetzten Seite an das anzubringende Element 2 angepasst. Dies geschieht nicht nur aus ästhetischen Gründen, sondern auch aus Festigkeitsgründen, da dadurch eine festere Verbindung hergestellt werden kann.

Die Schwenkhebel 22 und die Vierkantmutter 23 sind im Grundkörper 21 durch kleine nicht näher bezeichnete Rastnasen gesichert, so dass der Adapter 1 eine Einsatz fertige Einheit bildet.

Außerdem ist es möglich, das anzubringende Element 2 an dem Adapter 1 in 90°-Schritten gedreht anzubringen. Dies ist aber ebenfalls nicht aus den Figuren entnehmbar.

Bei der dargestellten Schraube 31 handelt es sich um eine Schraube deren Kopf einen sogenannten Innenvielkant aufweist. Selbstverständlich sind auch andere Kraftübertragungsmöglichkeiten dabei möglich.

Bei den gezeigten Profilrohren 3 sind jeweils nur vier Nuten 3a vorhanden und demzufolge auch nur vier Vorsprünge 3b. Es ist allerdings auch möglich, eine viel höhere Anzahl von Nuten 3a und dementsprechend auch Vorsprüngen 3b vorzusehen. Dazu könnte die Teilung der Nutvorsprunganordnung bei dem Profilrohr 3 so gewählt werden, dass die gezeigte Adapterversion zur Befestigung eines Elementes 2 verwandt werden könnte. Es ist allerdings auch möglich, für verschiedene Rohre auch verschiedene Adapter 1 vorzusehen.

Die Verwendung des beschriebenen Adapters 1 ist selbstverständlich universell gedacht und auch vorgesehen. In den Figuren ist lediglich ein sogenanntes Arbeitsplatzordnungssystem 2 an den Profilrohren 3 einer bestimmten Baureihe der Anmelderin befestigt. Da diese Profilrohre nicht über hinterschnittene Nuten verfügen, muss daher die Montage auf andere Art und Weise, die oben ausführlich beschrieben worden ist, erfolgen. Der erfindungsgemäße Adapter 1 nutzt die zentrale Schraube des Arbeitsplatzordnungssystems, um mittels der Vierkantmutter 23 zwei im Grundkörper 21 gelagerte Schwenkhebel 22 zu bewegen, welche den Adapter 1 form- und kraftschlüssig mit dem Profilrohr 3 verbinden.

Dabei drückt die Vierkantmutter 23 auf die ersten Enden 43 der Schwenkhebel 22, welche sich daraufhin an ihren Schwenkpunkt 42 drehen und mit ihren zweiten Enden 41 gegen die Flanken des Profilrohres 3 drücken. Dadurch entsteht die beschriebene kraft- und formschlüssige Verbindung.

Das Element bzw. in diesem Fall der Zubehörhalter 2 lässt sich in 90°-Schritten und in anderen Positionen montieren, so dass die Montage sowohl an horizontal, als auch vertikal verlaufenden Profilrohren erfolgen kann.

### Bezugszeichenliste:

- 1: Adapter
- 2: Arbeitsplatzordnungssystem / Zubehörhalter
- 3: Profilrohr
- 3a: Nut
- 3b: Vorsprung
- 21: Grundkörper
- 22: Schwenkhebel
- 23: Vierkantmutter
- 31: Schraube, zentral

## Patentansprüche

1. Adapter (1) zur Befestigung von Elementen (2) an Profilrohren (3), die mindestens zwei Nuten (3a) mit im wesentlichen geraden nicht hinterschnittenen Rändern aufweisen, wobei der Adapter (1) aus einem Grundkörper (21) zwei die zwei Ränder unterschiedlicher Nuten (3a) baggerartig ergreifenden Schwenkhebeln (22) und aus einer Schraube (31) und einer Mutter (23) besteht, mittels derer der Grundkörper (21) an dem Profilrohr (3) befestigbar ist, **dadurch gekennzeichnet, dass** die Mutter (23) durch Drehen der Schraube (31) gegen erste Enden (43) der Schwenkhebel (22) drücken, welche durch Drehen um ihren Schwenkpunkt mit ihren zweiten Enden (41) gegen die Flanken des Profilrohres (3) drücken können, wobei diese Schwenkhebel (12) mit ihrem aus dem Grundkörper (21) in Richtung Profilrohr (3) herausragenden freien zweiten Enden (41) einen Vorsprung (23b) klemmend ergreifen können, wobei eine kraft- und formschlüssige Verbindung vorhanden sein kann.

2. Adapter (1) nach Anspruch 1, **dadurch gekennzeichnet, dass** die Befestigung mittels der Einrichtung (22;23;31) über eine Außenklemmung eines zwischen zwei Nuten (3a) befindlichen Vorsprungs (3b) erfolgen kann.

3. Adapter (1) nach Anspruch 1 oder 2, **dadurch gekennzeichnet, dass** die Mutter eine Vierkantmutter (23) ist.

4. Adapter (1) nach einem der Ansprüche 1 bis 3, **dadurch gekennzeichnet, dass** die Schraube (31) auch der Befestigung des Elementes (2) an den Adapter (1) dient.

5. Adapter (1) nach einem der Ansprüche 1 bis 4, **dadurch gekennzeichnet, dass** das Element (2) an dem Adapter (1) in 90°-Schritten gedreht anbringbar ist.

6. Adapter (1) nach einem der Ansprüche 1 bis 5, **dadurch gekennzeichnet, dass** der Schwenkhebel (22) und die Mutter (23) als Teile der Einrichtung (22;23;31) im Grundkörper (21) durch Rastnasen gehalten und gesichert sind.

7. Adapter (1) nach einem der Ansprüche 1 bis 6, **dadurch gekennzeichnet, dass** die schraube (31) zu ihrer Betätigung bzw. Drehung einen Innenvielkant aufweist.

8. Adapter (1) nach einem der Ansprüche 1 bis 7, **dadurch gekennzeichnet, dass** der Adapter (1) aus Metall, Kunststoff oder einer Kombination daraus besteht.

## Claims

1. Adapter (1) for fastening elements (2) to profile tubes (3), which have at least two grooves (3a) with substantially straight edges that are not undercut, wherein the adapter (1) consists of a base body (21) two pivoting levers (22) gripping the two edges of different grooves (3a) and a screw (31) and a nut (23), by means of which the base body (21) can be fastened to the profile tube (3), **characterised in that** the nut (23), due to rotation of the screw (31), press against first ends (43) of the pivoting levers (22), which can, by rotating about their pivot point, press with their second ends (41) against the flanks of the profile tube (3), wherein these pivoting levers (12), with their free second ends (41) projecting from the base body (21) in the direction of the profile tube (3), grip a projection (23b) in a clamping manner, wherein a force-fitting and form-fitting connection can be present.

2. Adapter (1) according to claim 1, **characterised in that** the fastening can be effected by means of the device (22; 23; 31) via an outer clamping of a projection (3b) located between two grooves (3a).

3. Adapter (1) according to claim 1 or 2, **characterised in that** the nut is a square nut (23).

4. Adapter (1) according to any of claims 1 to 3, **characterised in that** the screw (31) also serves to fasten the element (2) to the adapter (1).

5. Adapter (1) according to any of claims 1 to 4, **characterised in that** the element (2) can be mounted on the adapter (1) in a rotated manner in 90° steps.

6. Adapter (1) according to any of claims 1 to 5, **characterised in that** the pivoting lever (22) and the nut (23) are held and secured as parts of the device (22; 23; 31) in the base body (21) by latching lugs.

7. Adapter (1) according to any of claims 1 to 6, **characterised in that** that the screw (31) has an inner polygon for its actuation or rotation.

8. Adapter (1) according to any of claims 1 to 7, **characterised in that** that the adapter (1) consists of metal, plastic or a combination thereof.

## Revendications

1. Adaptateur (1) pour la fixation d'éléments (2) sur des tubes profilés (3), qui présentent au moins deux rainures (3a) avec des bords non contre-dépouillés sensiblement rectilignes, dans lequel l'adaptateur (1) se compose d'un corps de base (21), de deux leviers pivotants (22) saisissant les deux bords de rainures différentes (3a) à la manière d'une pelleteuse et d'une vis (31) et d'un écrou (23), au moyen desquels le corps de base (21) peut être fixé sur le tube profilé (3), **caractérisé en ce que** l'écrou (23) poussent par rotation de la vis (31) contre des premières extrémités (43) des leviers pivotants (22), lesquels peuvent pousser par rotation autour de leur point de pivotement avec leurs deuxièmes extrémités (41) contre les flancs du tube profilé (3), dans lequel ces leviers pivotants (12) peuvent saisir une saillie (23b) par serrage avec leurs deuxièmes extrémités (41) libres dépassant du corps de base (21) en direction du tube profilé (3), dans lequel une liaison par force et par correspondance de forme peut être présente.

2. Adaptateur (1) selon la revendication 1, **caractérisé en ce que** la fixation peut se faire au moyen du dispositif (22 ; 23 ; 31) via un serrage extérieur d'une saillie (3b) se trouvant entre deux rainures (3a).

3. Adaptateur (1) selon la revendication 1 ou 2, **caractérisé en ce que** l'écrou est un écrou carré (23).

4. Adaptateur (1) selon l'une quelconque des revendications 1 à 3, **caractérisé en ce que** la vis (31) sert aussi à la fixation de l'élément (2) sur l'adaptateur (1).

5. Adaptateur (1) selon l'une quelconque des revendications 1 à 4, **caractérisé en ce que** l'élément (2) peut être monté tourné par pas de 90° sur l'adaptateur (1).

6. Adaptateur (1) selon l'une quelconque des revendications 1 à 5, **caractérisé en ce que** le levier pivotant (22) et l'écrou (23) sont retenus et bloqués en tant que parties du dispositif (22 ; 23 ; 31) dans le corps de base (21) par des nez d'encliquetage.

7. Adaptateur (1) selon l'une quelconque des revendications 1 à 6, **caractérisé en ce que** la vis (31) présente un polyèdre intérieur pour son actionnement ou sa rotation.

8. Adaptateur (1) selon l'une quelconque des revendications 1 à 7, **caractérisé en ce que** l'adaptateur (1) est en métal, plastique ou une combinaison de ceux-ci.
